# EUROPEAN PATENT SPECIFICATION

(11) **EP 2 580 294 B1**
(45) Date of publication and mention of the grant of the patent: **25.02.2015**
(21) Application number: 11724639.7
(22) Date of filing: 10.06.2011
(51) Int. Cl.: C09D 127/16, C08K 9/06, C08L 27/16, C08L 33/00, C09D 133/00

(54) **PVDF COATING COMPOSITIONS**
PVDF-Beschichtungszusammensetzungen
Compositions de revêtement en PVDF

(30) Priority: 12.07.2010 EP 10169234; 14.06.2010 US 354305 P
(43) Date of publication of application: 17.04.2013
(73) Proprietor: Solvay Solexis S.p.A., 20021 Bollate (MI) (IT)
(72) Inventor: LIN, Shiow-Ching, Lawrenceville, NJ 08648 (US); IEVA, Eliana, I-15121 Alessandria (AL) (IT)
(74) Representative: Benvenuti, Federica
(86) International application number: PCT/EP2011/059711
(87) International publication number: WO 2011/157657

(56) References cited:
- WO-A1-2009/003847
- US-A1- 2008 015 298
- BASU B B J ET AL: "A simple method for the preparation of superhydrophobic PVDF-HMFS hybrid composite coatings", APPLIED SURFACE SCIENCE, ELSEVIER, AMSTERDAM, NL, vol. 255, no. 8, 1 February 2009 (2009-02-01), pages 4479-4483, XP025883600, ISSN: 0169-4332, DOI: DOI:10.1016/J.APSUSC.2008.11.065 [retrieved on 2008-12-03]
- JERMAN I ET AL: "The effect of polyhedral oligomeric silsesquioxane dispersant and low surface energy additives on spectrally selective paint coatings with self-cleaning properties", SOLAR ENERGY MATERIALS AND SOLAR CELLS, ELSEVIER SCIENCE PUBLISHERS, AMSTERDAM, NL, vol. 94, no. 2, 1 February 2010 (2010-02-01), pages 232-245, XP026815527, ISSN: 0927-0248 [retrieved on 2009-10-14]
- YAN L ET AL: "SUPER HYDROPHOBIC PROPERTY OF PVDF/CACO3 NANOCOMPOSITE COATINGS", JOURNAL OF MATERIALS SCIENCE LETTERS, CHAPMAN AND HALL LTD. LONDON, GB, vol. 22, no. 23, 1 December 2003 (2003-12-01), pages 1713-1717, XP001199320, ISSN: 0261-8028, DOI: DOI:10.1023/B:JMSL.0000004656.60950.5B

## Description

### Technical Field

The present invention concerns highly hydrophobic vinylidene fluoride (VDF) polymer coating compositions containing hydrophobic additives. The invention also deals with the use of certain additive compositions containing fluoroalkyl moieties and hydrogenated functional moieties to provide high hydrophobicity to polyvinylidene fluoride coatings. The invention also deals the processes to incorporate hydrophobic additives into PVDF powders suitable for the preparation of highly hydrophobic PVDF coatings.

### Background Art

Hydrophobic and superhydrophobic surfaces are desirable in numerous applications wherein VDF polymer coatings are desirable, such as windows, DVD disks, cooking utensils, clothing, medical instruments, automotive parts, textiles, and like applications, and also other applications in which self-cleaning is desired. It is generally understood that such hydrophobic or superhydrophobic surface properties are associated to water contact angles of exceeding 100°, up to 140°-150°, largely exceeding those achievable via native VDF polymer coatings. Also, standard highly weatherable PVDF coating generally contains about 20-40 weight % of acrylic resin, which further reduces water contact angle of native PVDF resins to values between 60° to 75° depending on film development conditions.

Typically superhydrophobic surfaces can be created by changing the surface chemistry or by increasing the surface roughness via surface texturing so as to increase the true or effective surface area or by combining both of these methods. Surface texturing may be cumbersome, expensive, and may be difficult to achieve for large and complex articles. Chemical methods typically involve the addition of fluorine-modified fillers to standard coating compositions.

Thus, JP 10273616 (TORAY INDUSTRIES) 13.10.1998 discloses a PVDF coating composition comprising:
- a vinylidene fluoride polymer;
- inorganic fine particles, like notably silicon oxide particles having averaged particle sizes typically of 5 to 100 nm, which are treated on their surfaces with a silylating agent, preferably with a fluorinated alkyl alkyloxy siloxane;
- possibly an additional resin (e.g. acrylic resin); and
- possibly a solvent.
Working embodiments provided in this document pertain to a paint composition wherein silica particles have been pre-treated with perfluorooctylethyltriethoxysilane and then mixed with a VDF polymer in a mixture of NMP/MEK. A coating having a water contact angle of 162°, this showing super-water repellence, was thus obtained therefrom.

Similarly, JP 10273617 (TORAY INDUSTRIES) 13.10.1998 discloses hydrophobic films having roughened surface obtained from a coating composition comprising:
- a fluoropolymer, such as a vinylidene fluoride polymer;
- inorganic fine particles (e.g. silicon oxides) having average particle size of 5 to 100 nm treated on their surfaces with a hydrophobitization agent, typically fluoroalkylsiloxanes or phenylsiloxanes;
- possibly an additional resin (e.g. acrylic resin); and
- possibly a solvent.
A specific example is provided of a paint composition wherein silica particles have been pre-treated with perfluorooctylethyltriethoxysilane and then mixed with a VDF polymer in a mixture of NMP/MEK. A coating having a water contact angle of 162°, this showing super-water repellence, was thus obtained therefrom.

Nevertheless, the addition of these fluoro-containing additives enables achievement of such superhydrophobic surface properties only when the amount of additive in the composition is significant, with associated economical issues. Indeed, due to the high cost of the fluoroalkylsiloxane modifiers used for manufacturing the additives, their addition in high concentration significantly contributes to the cost of the whole coating composition.

Also, it has been observed that addition of above mentioned fluoro-containing additives in standard VDF polymer-based paint formulations negatively affect their liquid viscosity, so that processability of said paints might become critical.

In view of all the above, there is thus still a need in the art for VDF polymer coating compositions suitable for providing coatings having improved hydrophobic properties, available at reasonable costs and possessing outstanding processability.

### Disclosure of Invention

The invention pertains to a vinylidene fluoride(VDF) polymer composition comprising:
- at least one VDF polymer [polymer (F)]; and
- at least one additive obtained by treating inorganic particles with a mixture of modifying agents comprising:
- at least one fluoro-containing modifying agent [agent (X)] of formula:

   X₄₋ₘAYₘ

   wherein m is an integer from 1 to 3, A is a metal selected from the group consisting of Si, Ti and Zr, each of Y, equal to or different from each other, is a hydrolysable group, each of X, equal to or different from each other is a C₁-C₂₄ (hydro)(fluoro)carbon group, with the proviso that at least one of X is a fluorine-containing C₁-C₂₄ group; and
- at least one hydrogen-containing functional modifying agent [agent (Z)] of formula:

   Z₄₋ₚEYₚ

   wherein p is an integer from 1 to 3, E is a metal selected from the group consisting of Si, Ti and Zr, each of Y, equal to or different from each other, is a hydrolysable group, each of Z, equal to or different from each other is a C₁-C₂₄ hydrocarbon group, with the proviso that at least one of Z comprises a functional group selected from the group consisting of ethylenically unsaturated group; epoxy group; mercapto group; carboxylic acid group (in its acid, ester, amide, anhydride, salt or halide form), sulphonic group (in its acid, ester, amide, salt or halide form).

The Applicant has surprisingly found that the combination of both the fluoro-containing modifying agent and of the hydrogen-containing functional modifying agent on the inorganic particles provide for an additive yielding, when used in VDF polymer composition, both outstanding liquid viscosity and unexpected synergistic improvement of hydrophobicity of VDF polymer coatings obtained therefrom. As a consequence, the modified additive can be used at low concentrations, with corresponding economical advantages.

The vinylidene fluoride polymer [polymer (F)] is preferably a polymer comprising :
(a') at least 60 % by moles, preferably at least 75 % by moles, more preferably 85 % by moles of vinylidene fluoride (VDF);
(b') optionally from 0.1 to 15%, preferably from 0.1 to 12%, more preferably from 0.1 to 10% by moles of a fluorinated monomer different from VDF; said fluorinate monomer being preferably selected in the group consisting of vinylfluoride (VF₁), chlorotrifluoroethylene (CTFE), hexafluoropropene (HFP), tetrafluoroethylene (TFE), perfluoromethylvinylether (MVE), trifluoroethylene (TrFE) and mixtures therefrom; and
(c') optionally from 0.1 to 5 %, by moles, preferably 0.1 to 3 % by moles, more preferably 0.1 to 1% by moles, based on the total amount of monomers (a') and (b'), of one or more hydrogenated comonomer(s).

The vinylidene fluoride polymer [polymer (F)] is more preferably a polymer consisting of :
(a') at least 60 % by moles, preferably at least 75 % by moles, more preferably 85 % by moles of vinylidene fluoride (VDF);
(b') optionally from 0.1 to 15%, preferably from 0.1 to 12%, more preferably from 0.1 to 10% by moles of a fluorinated monomer different from VDF; said fluorinate monomer being preferably selected in the group consisting of vinylfluoride (VF₁), chlorotrifluoroethylene (CTFE), hexafluoropropene (HFP), tetrafluoroethylene (TFE), perfluoromethylvinylether (MVE), trifluoroethylene (TrFE) and mixtures therefrom.

As non limitative examples of the VDF polymers useful in the present invention, mention can be notably made of homopolymer of VDF, VDF/TFE copolymer, VDF/TFE/HFP copolymer, VDF/TFE/CTFE copolymer, VD/TFE/TrFE copolymer, VDF/CTFE copolymer, VDF/HFP copolymer and VDF/TFE/HFP/CTFE copolymer.

VDF homopolymer is particularly advantageous for the compositions of the invention.

The melt viscosity of the VDF polymer measured at 232°C and 100 sec⁻¹ of shear rate according to ASTM D3835 is advantageously at least 5 kpoise, preferably at least 10 kpoise.

The melt viscosity of the VDF polymer measured at 232°C and 100 sec⁻¹ of shear rate is advantageously at most 60 kpois, preferably at most 40 kpoise, more preferably at most 35 kpoise.

The melt viscosity of VDF polymer is measured in accordance with ASTM test No. D3835, run at 232°C, under a shear rate of 100 sec⁻¹.

The VDF polymer has a melting point of advantageously at least 120°C, preferably at least 125°C, more preferably at least 130°C.

The VDF polymer has a melting point advantageously of at most 190°C, preferably at most 185°C, more preferably at most 170°C.

The melting point (Tₘ₂) can be determined by DSC, at a heating rate of 10°C/min, according to ASTM D 3418.

One example of a commercially available PVDF, which is particularly suitable for use in the present composition, is HYLAR^{®} 5000 PVDF (available from Solvay Solexis Inc.).

The additive of the composition of the invention is obtained by treating inorganic particles with a mixture of modifying agents, as above detailed.

The choice of the inorganic particles is not particularly critical; it is generally understood that inorganic particles which remain inert during VDF polymer processing and use are preferred. Non limitative examples of particles which can be used are notably particles of metal oxides, metal carbonates, metal sulphates and the like. Metal oxides are generally selected among Si, Zr, and Ti oxides and mixed oxide comprising these metals in combination with one or more other metal(s) or non metal(s); e.g. silica, alumina, zirconia, alumino-silicates (including natual and synthetic clays), zirconates and the like. Metal carbonates are typically selected from the group consisting of alkaline and alkaline earth metal carbonates, e.g. Ca, Mg, Ba, Sr carbonates. Metal sulphates are generally selected among alkaline and alkaline earth metal sulphates, including Ca, Mg, Ba, Sr sulphates. A metal sulphate which has provided particularly good result is barium sulphate.

The inorganic particles (before treatment with the mixture of fluoro-containing modifying agent and of the functional hydrogenated modifying agent) generally have an average particle size of 0.0001 µm to 2000 µm, preferably of 0.001 µm to 1000 µm, more preferably of 0.01 µm to 500 µm.

To the aim of maximizing surface area and interfaces with the host VDF polymer, inorganic particles having nanometric dimensions and high surface area are typically preferred.

To this aim, inorganic particles having an averaged particle size comprised from 1 nm to 250 nm, preferably from 2 to 200, more preferably from 3 to 150 are preferably employed.

Said inorganic particles are treated with the mixture of modifying agents, as above defined.

In the fluoro-containing modifying agent [agent (X)] of formula:

X₄₋ₘAYₘ

as above defined, the selection of each of Y, equal to or different from each other, is not particularly limited, provided that it enables in appropriate conditions formation of a covalent bond with the surface of the inorganic particle; said hydrolysable group can be notably a halogen (especially a chlorine atom), a hydrocarboxy group, a acyloxy group, a hydroxyl group, preferably a group selected from Cl, -OR^{X} groups, with R^{X} being a C₁-C₆ and a hydroxyl group. In preferred embodiments, Y is selected from the group consisting of methoxy, ethoxy, chloro, and hydroxyl groups. Ethoxy is more typical for ease of handling, but methoxy is also widely used.

To the aim of maximizing reactivity towards inorganic particles and easy handling of the same, agents (X) are generally silicon-containing agents, i.e. agents (X) wherein A is Si.

As per the groups X, at least one of them is a fluorine-containing C₁-C₂₄ group.

Said fluorine-containing C₁-C₂₄ group is typically a fully-fluorinated radical, but hydrogen or chlorine atoms can be present as well; if present, the number of either does not generally exceed the number of fluorine atoms. The fluorine-containing C₁-C₂₄ group preferably contains about 40% to about 80% fluorine by weight, more preferably about 50% to about 79 % fluorine by weight. The terminal portion of said group is generally a perfluorinated moiety, which will preferably contain at least 7 fluorine atoms, e.g., CF₃CF₂CF₂-, (CF₃)₂CF-. When hydrogen atoms are present, at least a fraction of them are generally bound to carbon atoms in alpha and/or beta position with respect to the metal centre A.

The fluorine-containing C₁-C₂₄ group can also be a (per)fluoropolyether group. The perfluoropolyether group can include linear, branched, and/or cyclic structures, that may be saturated or unsaturated, and which comprise one or more catenary oxygen atoms. It is preferably a perfluorinated group (i.e., all C-H bonds are replaced by C-F bonds). More preferably, it includes perfluorinated repeating units selected from the group of -(CF₂O)-, -(CₙF₂ₙO)-, -(CF(Z)O)-, -(CF(Z)CnF2nO)-, -(CₙF₂ₙCF(Z) O)-, wherein Z is a perfluoroalkyl group, an oxygen-substituted perfluoroalkyl group, a perfluoroalkoxy group, or an oxygen-substituted perfluoroalkoxy group, all of which can be linear, branched, or cyclic, and preferably have about 1 to about 9 carbon atoms and 0 to about 4 oxygen atoms and n is an integer of 1 to 4. The terminal portion of said groups is typically a C₁-C₃ fluoroalkyl group, possibly comprising one or more of H, Cl, and Br; C₁-C₃ perfluoroalkyl group being preferred.

Particularly preferred approximate average structures for a perfluoropolyether group include C₃F₇O(CF(CF₃)CF₂O)ₚCF(CF₃)- and CF₃O-(C₂F₄O)ₚCF₂-, CF₃(CFZ)ⱼO(C₂F₄O)ₚ₁(CF(CF₃)CF₂O)ₚ₂(CF₂O)ₚ₃CFZ-wherein an average value for p or for the sum p1+p2+p3 is 1 to about 50, and Z is -F or -CF₃.

According to an embodiment, said fluorine-containing C₁-C₂₄ group complies with formula R_{f}^{X}-G^{X}- group wherein R_{f}^{X} is a mono, oligo- or perfluorinated alkyl group having up to 18 carbon atoms or a mono-, oligo-or perfluorinated aryl group having up to 18 carbon atoms, and G^{X} is a fluorine-free divalent hydrocarbon moiety. Furthermore, R_{f}^{X} may contain heteroatoms, like notably O, S, Cl or N. Should R_{f}^{X} contain oxygen atom(s), it preferably comprises one or more ethereal oxygen. G^{X} can be an aryl group or a -(CH₂)ₙₓ- group, with nx being an integer between 1 and 6, preferably nx being 2.

Should the agent (X) comprise only one fluorine-containing C₁-C₂₄ group, other groups bound to the metal A are either hydrolysable group Y, as above defined or C₁-C₂₄ hydrocarbon group.

While the agent (X) can contain more than one group X, agents (X)
wherein m = 3 are generally used.

Among examples of agents (X), mention can be notably made of CF₃(CH₂)₂ Si(OCH₃)₃, CF₃(CH₂)₂SiCl₃, CF₃(CF₂)₃(CH₂)₂Si(OCH₃)₃, CF₃(CF₂)₃ (CH₂)₂Si(OC₂H₅)₃, CF₃(CF₂)₃(CH₂)₂SiCl(CH₃)₂, CF₃(CF₂)₃(CH₂)₂Si(CH₃)Cl₂ , CF₃(CF₂)₃(CH₂)₂Si(OCH₃)₃, CF₃(CF₂)₅(CH₂)₂Si(OCH₂CH₃)₃, CF₃ (CF₂)₅(CH₂)₂Si(OCH₃)₃, CF₃(CF₂)₅(CH₂)₂SiCl₃, CF₃(CF₂)₇(CH₂)₂Si(OCH₃)₃, CF₃(CF₂)₇(CH₂)₂Si(OCH₂CH₃)₃ .

In the hydrogen-containing functional modifying agent [agent (Z)] of formula: Z₄₋ₚEYₚ as above defined, the selection of each of Y, equal to or different from each other, is not particularly limited, provided that it enables in appropriate conditions formation of a covalent bond with the surface of the inorganic particle; said hydrolysable group can be notably a halogen (especially a chlorine atom), a hydrocarboxy group, a acyloxy group, a hydroxyl group, preferably a group selected from Cl, -OR^{X} groups, with R^{X} being a C₁-C₆ and a hydroxyl group. In preferred embodiments, Y is selected from the group consisting of methoxy, ethoxy, chloro, and hydroxyl groups. Ethoxy is more typical for ease of handling, but methoxy is also widely used.

As mentioned, in agent (Z), each of Z, equal to or different from each other is a C₁-C₂₄ hydrocarbon group, with the proviso that at least one of Z comprises a functional group selected from the group consisting of ethylenically unsaturated group; epoxy group; mercapto group; carboxylic acid group (in its acid, ester, amide, anhydride, salt or halide form), sulphonic group (in its acid, ester, amide, salt or halide form).

Among ethylenically unsaturated groups, mention can be made of vinyl groups and (meth)acrylic groups.

Examples of agents (Z) suitable for the purpose of the invention are notably vinyltriethoxysilane, vinyltrimethoxysilane,
vinyltrismethoxyethoxysilane of formula CH₂=CHSi(OC₂H₄OCH₃)₃, 2-(3,4-epoxycyclohexylethyltrimethoxysilane) of formula: 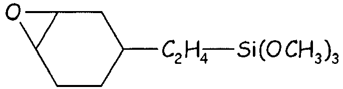 glycidoxypropylmethyldiethoxysilane of formula: 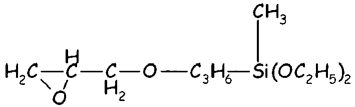 glycidoxypropyltrimethoxysilane of formula: 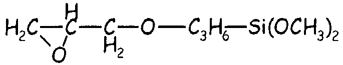 methacryloxypropyltrimethoxysilane of formula: 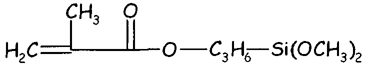 3-chloroisobutyltriethoxysilane, 3-chloropropyltrimethoxysilane,
3-mercaptopropyltriethoxysilane, 3-mercaptopropyltrimethoxysilane,
(3-acryloxypropyl)dimethylmethoxysilane,
(3-acryloxypropyl)methyldichlorosilane,
(3-acryloxypropyl)methyldimethoxysilane,
2-(4-chlorosulfonylphenyl)ethyltrimethoxysilane,
2-(4-chlorosulphonylphenyl)ethyl trichlorosilane, carboxyethylsilanetriol,
and its sodium salts, triethoxysilylpropylmaleamic acid of formula: 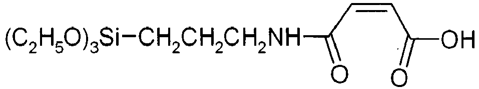 3-(trihydroxysilyl)-1-propane-sulphonic acid of formula HOSO₂-CH₂CH₂ CH₂-Si(OH)₃, N-(trimethoxysilylpropyl)ethylene-diamine triacetic acid, and its sodium salts, 3-(triethoxysilyl)propylsuccinic anhydride of formula: 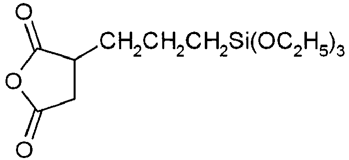 acetamidopropyltrimethoxysilane of formula H₃C-C(O)NH-CH₂CH₂CH₂ -Si(OCH₃)₃, acetoxypropyltrimethoxysilane of formula H₃C-C(O)O-CH₂CH₂ CH₂-Si(OCH₃)₃, acetoxypropyltriethoxysilane of formula H₃C-C(O)O-CH₂ CH₂CH₂-Si(OCH₂CH₃)₃, acetoxypropyltrichlorosilane of formula H₃C-C(O)O-CH₂CH₂CH₂-SiCl₃.

Among functional groups, those who have been shown to provide particularly good results in particular with pigmented coatings are those comprising carboxylic acid groups, in particular in their ester form.

Should the agent (Z) comprise only one functional group-containing C₁-C ₂₄ hydrocarbon group, other groups bound to the metal A are either hydrolysable group Y, as above defined or C₁-C₂₄ hydrocarbon group free from functional groups.

To the aim of maximizing reactivity towards inorganic particles and easy handling of the same, agents (Z) are generally silicon-containing agents, i.e. agents (Z) wherein A is Si.

While the agent (Z) can contain more than one group Z, agents (Z)
wherein p = 3 are generally used.

When modifying inorganic particles with the mixture of agent (X) and agent (Z), as above detailed, hydrolysable groups of said agents advantageously react with superficial groups, generally hydroxyl groups, of the inorganic particles, so as to covalently anchor to said particles both the fluorine-containing residue and the functional group-containing residue.

Without being bound by this theory, the Applicant is of the opinion that the presence of functional residues derived from the hydrogen-containing functional modifying agent onto the inorganic particles modified with a combination of agent (X) and agent (Z) enables suitable interaction of the additive with the VDF polymer host matrix which stabilize the dispersion of said additive in the coating and thus synergistically improve hydrophobic effect due to the presence of fluorine-containing groups.

The way the inorganic particles are treated with the mixture of modifying agents is not particularly limited. Generally, a liquid medium, typically, an alcoholic medium will be used. Conditions will be selected by the skilled in art as a function of agents (X) and (Z) employed. Typically, conditions wherein adequate conversion of hydrolysable groups are chosen.

Generally the mixture of modifying agents (X) and (Z) will be used in amounts of at least 5%, preferably at least 10 %, more preferably at least 15 % by weight, with respect to the weight of the inorganic particles.

While there is no particular limitation on the upper boundaries, it is generally preferred for avoiding overload or gellation of the agents separately from the inorganic particles to limit the amount of about 70 %, preferably 60 %, more preferably 50 % by weight, with respect to the weight of the inorganic particles.

Agents (X) and (Z) can be used in any ratios. It is nevertheless understood that for achieving outstanding hydrophobicity properties, the agent (X) will be used in amounts of at least 30 %, in certain embodiments at least 50 %, or even at least 70 %, with respect to the combined weight of agent (X) and agent (Z).

According to a preferred variant of the invention, the composition as above described is a coating composition and/or is used for the manufacture of a coating composition.

Coating composition of the invention generally comprises the polymer (F) of the inventive composition either at least partially dispersed or at least partially solubilised in a liquid medium.

According to a first embodiment of this variant, the polymer (F) is at least partially dispersed in said liquid medium.

By the term "dispersed" is meant that particles of polymer (F) are stably dispersed in the liquid medium, so that neither settlement into cake nor solvation of the particles does occur during paint preparation and upon storage.

Polymer (F) according to this embodiment is preferably substantially in dispersed form that is to say that more that 90 % wt, preferably more than 95% wt, more preferably than 99 % wt is dispersed in the liquid medium.

According to this embodiment, the liquid medium comprises at least one organic solvent selected from intermediate and latent solvents for the polymer (F).

An intermediate solvent for the polymer (F) is a solvent which does not dissolve or substantially swell the polymer (F) at 25°C, which solvates polymer (F) at its boiling point, and retains polymer (F) in solvated form, i.e. in solution, upon cooling.

A latent solvent for the polymer (F) is a solvent which does not dissolve or substantially swell polymer (F) at 25°C, which solvates polymer (F) at its boiling point, but on cooling, polymer (F) precipitates.

Latent solvents and intermediate solvents can be used alone or in admixture. Mixtures of one or more than one latent solvent with one or more than one intermediate solvent can be used in this second preferred variant.

Intermediate solvents suitable for the coating composition of this embodiment are notably butyrolactone, isophorone and carbitol acetate.

Latent solvents suitable for the coating composition of this embodiment are notably methyl isobutyl ketone, n-butyl acetate, cyclohexanone, diacetone alcohol, diisobutyl ketone, ethyl acetoacetate, triethyl phosphate, propylene carbonate, triacetin (also known as 1,3-diacetyloxypropan-2-yl acetate), dimethyl phthalate, glycol ethers based on ethylene glycol, diethylene glycol and propylene glycol, and glycol ether acetates based on ethylene glycol, diethylene glycol and propylene glycol.

Non limitative examples of glycol ethers based on ethylene glycol, diethylene glycol and propylene glycol are notably ethylene glycol monomethyl ether, ethylene glycol monoethyl ether, ethylene glycol monopropyl ether, ethylene glycol monobutyl ether, ethylene glycol dimethyl ether, ethylene glycol diethyl ether, ethylene glycol dibutyl ether, diethylene glycol monomethyl ether, diethylene glycol monoethyl ether, diethylene glycol mono-n-butyl ether, propylene glycol methyl ether, propylene glycol dimethyl ether, propylene glycol n-propyl ether.

Non limitative examples of glycol ether acetates based on ethylene glycol, diethylene glycol and propylene glycol are notably ethylene glycol methyl ether acetate, ethylene glycol monethyl ether acetate, ethylene glycol monobutyl ether acetate, propylene glycol methyl ether acetate.

Non-solvents for polymer (F) such as methanol, hexane, toluene, ethanol and xylene may also be used in combination with latent solvent and/or intermediate solvent for special purpose, e.g. for controlling paint rheology, in particular for spray coating.

Generally, the liquid medium of this embodiment of the invention will consist essentially of one or more organic solvents selected from latent solvents and intermediate solvents, as above detailed. Minor amounts (e.g. of less than 5 % wt, preferably less than 1 % wt) of water or other organic solvents might be present in the liquid medium of the composition of this second variant, without this affecting the properties of the coating compositions.

Within this embodiment, polymer (F) can be provided under dispersed form by dispersing a powder of bare polymer (F), generally an agglomerated powder obtained from latex coagulation and drying, in a liquid medium comprising latent and/or intermediate solvent as above detailed; coating composition of the invention can thus be obtained by mixing said polymer (F) in said dispersed form with the additive, as above defined, and with all other optional ingredients and additives, including, notably pigments.

As an alternative, a pre-mixed powder consisting essentially of polymer (F), of said additive and, optionally, of other solid ingredients, including, notably pigments, as below detailed, can be manufactured first and used instead of powder of bare polymer (F) in the process for manufacturing the coating composition, as above detailed.

According to this alternative, said pre-mixed powder is generally obtained by mixing in an aqueous phase a powder of bare polymer (F), generally an agglomerated powder obtained from latex coagulation, with said additive, as above detailed, and optionally with said other ingredients, then evaporating the aqueous phase until dryness, at a temperature of at least 50°C, and optionally grinding or sieving the so obtained solid residue in order to obtain a pre-mixed powder, advantageously possessing free-flowing properties.

The choice of the device for dispersing the polymer (F) or the pre-mixed powder in said liquid medium is not particularly limited, High shear mixers or other size-reduction equipment such as high pressure homogenizer, a colloidal mill, a fast pump, a vibratory agitator or an ultrasound device can be used.

Agglomerated powders of polymer (F) particularly suitable for this embodiment are composed of primary particles having an average particle size of preferably 200 to 400 nm and are typically under the form of agglomerates having an average particle size distribution of preferably 1 to 100 µm, more preferably of 5 to 50 µm.

According to a second embodiment of this variant of the invention, the polymer (F) is at least partially dissolved in said liquid medium.

By the term "dissolved" is meant that the polymer (F) is present in solubilised form in the liquid medium.

Polymer (F) according to this embodiment is preferably substantially in dissolved form that is to say that more than 90 % wt, preferably more than 95% wt, more preferably than 99 % wt is dissolved in the liquid medium.

The liquid medium according to this embodiment preferably comprises an organic solvent selected among active solvents for polymer (F).

An active solvent for polymer (F) is a solvent which is able to dissolve at least 5 % wt of a polymer (F) (with respect to the total weight of the solution) at a temperature of 25°C.

Active solvents which can be used in this embodiment are notably acetone, tetrahydrofurane, methyl ethyl ketone, dimethylformamide, dimethylacetamide, tetramethylurea, dimethylsulfoxide, trimethylphosphate, N-methyl-2-pyrrolidone.

The liquid medium of this second embodiment can further comprise one or more of intermediate and/or latent solvents for the polymer (F). Nevertheless, the liquid medium will preferably comprise a major amount of the active solvent.

The coating composition of the invention generally additionally comprise at least one (meth)acrylic polymer [polymer (M)].

Polymer (M) typically comprises recurring units selected from the group of formulae j, jj, jjj of formulae: 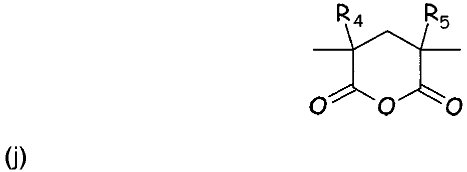 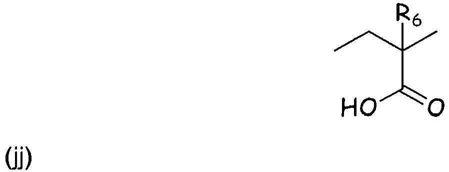 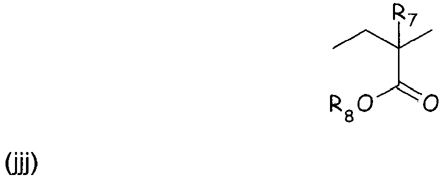 wherein R₄, R₅, R₆, R₇, equal to or different from each other are independently H or C₁₋₂₀ alkyl group, R₈ is selected from the group consisting of substituted or non substituted, linear or branched, C₁-C₁₈ alkyl, C₁-C₁₈ cycloalkyl, C₁-C₃₆ alkylaryl, C₁-C₃₆ aryl, C₁-C₃₆ heterocyclic group.

Preferably, polymer (M) comprises recurring units of formula j, as detailed above. Optionally polymer (M) can comprise additional recurring units different from j, jj, jjj, typically derived from ethylenically unsaturated monomers, such as notably olefins, preferably ethylene, propylene, 1-butene, styrene monomers, such as styrene, alpha-methyl-styrene and the like.

Preferably, polymer (M) is a polymer comprising recurring units derived from one or more than one alkyl (meth)acrylate. A polymer (M) which gave particularly good result within the context of the present invention is a copolymer of methyl methacrylate and ethyl acrylate. This polymer (M) is notably commercially available under trade name PARALOID™ B-44.

Should the coating composition comprise polymer (M), it is generally comprised in the composition of the invention in a weight ratio polymer (M)/polymer (F) of 10/1 to 1/10, preferably of 5/1 to 1/5, more preferably of 3/1 to 1/3.

The coating composition of the invention can further comprise one or more pigments. Pigments useful in the composition of the invention notably include, or will comprise, one or more of the following : titanium dioxide which is available form Whittaker, Clark & Daniels, South Plainfield, New Jersey, USA; Artic blue #3, Topaz blue #9, Olympic blue #190, Kingfisher blue #211, Ensign blue #214, Russet brown #24, Walnut brown #10, Golden brown #19, Chocolate brown #20, Ironstone brown #39, Honey yellow #29, Sherwood green #5, and Jet black #1 available from Shepard Color Company, Cincinnati, Ohio, USA.; black F-2302, blue V-5200, turquoise F-5686, green F-5687, brown F-6109, buff F-6115, chestnut brown V-9186, and yellow V-9404 available from Ferro Corp., Cleveland, Ohio, USA and METEOR^{®} pigments available from Englehard Industries, Edison, New Jersey, USA.

Another object of the invention is the use of the inventive composition as described above for coating substrates.

Coating technique is not particularly limited. All standard coating techniques suitable for coating compositions comprising a liquid medium can be suitable to this aim. Mention can be notably made of spray coating, curtain coating, casting, coil coating and the like.

Techniques particularly adapted for coating substrates with the composition of the invention are notably coil coating or spray coating.

The choice of substrates is not particularly limited; plastic and metal substrates are illustrative examples.

Should the disclosure of any patents, patent applications, and publications which are incorporated herein by reference conflict with the description of the present application to the extent that it may render a term unclear, the present description shall take precedence.

The invention will be now described with reference to the following examples, whose purpose is merely illustrative and not intended to limit the scope of the invention.

### Raw materials

### Inorganic particles

Aerosil^{®} 150 and Aerosil^{®} 300 nano-fumed silica products were obtained from Evonik-Degussa. They have average particle sizes of 14 nm and 7 nm, and average surface areas of 150 m²/g and 300 m²/g, respectively.

### Modifiers

Modifiers used for manufacturing the additives are listed in the following table:

**Table 1**

| Code | Modifier |
|---|---|
| R_{F} (C10)-Et | 1H,1H,2H,2H-heptadecafluorodecyltri-ethoxysilane |
| R_{F} (C10)-Me | 1H,1H,2H,2H-heptadecafluorodecyltri-methoxysilane |
| R_{F} (C8)-Et | Tridecafluorooctyltriethoxysiloane |
| Aceto-Me | Acetoxypropyltrimethoxysilane |

### Preparative Examples 1-8. Preparation of modified additives

A predetermined weight of fumed silica was charged into a glass jar. Either methanol or ethanol was then added to form a thick paste after mixing. Right amount of modifying compounds was then added to the paste. Water and acetic acid were finally added to begin the modification reaction. Normally the reaction was carried out at ambient condition overnight. In the absence of the hydrogen-containing functional modifying agent, the viscosity of the alcoholic dispersion of the modified additive was found to be extremely high and hardly workable. After a couple of days of standing, the modified fumed silica was ready for evaluation. The modifiers used in this study are listed in Table 1. The compositions of fumed silica modification are summarized in Table 2.

**Table 2**

| Example # | 1* | 2* | 3 | 4 | 5 | 6 | 7 | 8* |
|---|---|---|---|---|---|---|---|---|
| Ingredient | Amount (g) | | | | | | | |
| R_{F} (C10)-Et | 2.89 | ---- | ---- | ---- | ---- | ---- | ---- | ---- |
| R'_{F} (C10)-Me | ---- | ---- | 2.02 | 1.01 | ---- | ---- | ---- | ---- |
| R_{F} (C8)-Et | ---- | ---- | ---- | ---- | 1.08 | 0.77 | 0.39 | 1.08 |
| Aceto-Me | ---- | 1.58 | 0.79 | 0.39 | 0.24 | 0.39 | 0.59 | ---- |
| A-300 | 4.0 | 6.0 | 6.0 | ---- | ---- | ---- | ---- | ---- |
| A-150 | ---- | ---- | ---- | 6.0 | 6.0 | 6.0 | 6.0 | 6.0 |
| Ethanol | 45.0 | ---- | ---- | 60 | 50 | 60 | 50 | 48.5 |
| Methanol | ---- | 60 | 60 | ---- | ---- | ---- | ---- | ---- |
| Water | 2.37 | 3.16 | 3.16 | 3.16 | 2.63 | 3.16 | 2.63 | 2.50 |
| Acetic acid | 0.25 | 0.39 | 0.39 | 0.39 | 0.39 | 0.39 | 0.39 | 0.38 |
| Solid % | 12.6 | 10.7 | 12.2 | 10.4 | 12.1 | 10.1 | 11.6 | 12.1 |
| Dispersion viscosity | Pasty | Low | Low | Low | Low | Low | Low | Pasty |

| | | | | | | | | |
|---|---|---|---|---|---|---|---|---|
| * Comparative example | | | | | | | | |

### Preparation Example 9. Preparation of HYLAR® 5000 Blue Paint

Into a glass jar, 100 grams of Hylar^{®} 5000 PVDF along with 106 gram of an acrylic resin (∼40 weight % in toluene) known as Paraloid^{®} B44 from Rohm and Haas, 174 gram of isophorone and 43 grams of Blue 3 pigment from Shepherd were charged. After brief mixing, glass beads were added to this mixture as grinding media. The glass jar was sealed and the mixture was shaken by a mechanical shaker (Red Devil) for 2 hours. The standard blue PVDF paint was then filtered with coarse filter to remove glass beads.

### Comparative Example 10. Preparation of Aeroxide LE 1 Dispersion

A commercial fumed silica product, Aeroxide LE 1 promoted as "Lotus effect" additive was supplied by Evonik. In a Jar, the mixture of 30.15 gram of Aeroxide LE 1 and 91.24 gram of isophorone was shaken to a homogeneous dispersion. This dispersion was then used as additive for standard blue Hylar^{®} 5000 PVDF paint modification. Different levels of the additive were separately added to standard Hylar^{®} 5000 blue paint in different jars. After applying on aluminum panels, thin coatings were baked in coil(*) or spray coat(**) conditions. The water contact angles were measured and are exhibited in Table 3.
(*) Coil coat condition: Coating was baked in a 518°F (270°C) oven for 45 to 50 seconds to reach a peak metal temperature of 465 to 480°F (240-249°C). As soon as the panel was removed from oven, the coating was quenched by dipping the panel in ambient water.
(**) Spray coat condition: Coating was baked in a 465°F (240°C) oven for 20 minutes and, then, slowly cooled in ambient condition.

**Table 3**

| | | | | | | |
|---|---|---|---|---|---|---|
| Additive/solid paint, phr | 0 | 1.30 | 3.32 | 4.17 | 6.44 | 7.98 |

| Water contact angle (WCA) | | | | | | |
|---|---|---|---|---|---|---|
| Coil coat | 67.5 | 65.3 | 64.3 | 64.6 | 69.3 | 74.3 |
| Spray Coat | 73.6 | 72.8 | 71.4 | 67.7 | 75.6 | 80.4 |

### Example 11. Preparation of Hydrophobic Blue Hylar® 5000 Paint

To 40 grams of the paint from Preparation Example 9 was added with a certain amount of a selected additive. The mixture was then added with glass beads and shake for an hour using Red Devil shaker. Glass beads were filtered off by coarse filter. The final paint was applied on a chromated aluminum panel and baked. Coil and spray coat conditions were employed for coating film development. Afterward, water contact angle was determined. Results are summarized in tables 7 and 8 herein below.

**Table 7**

| Example 11C | | | Example 12C | | | Example 13 | | |
|---|---|---|---|---|---|---|---|---|
| Additive of Ex. 1 | | | Additive of Ex. 2 | | | Additive of Ex. 3 | | |
| phr | WCA | | phr | WCA | | phr | WCA | |
| | C | S | | C | S | | C | S |
| 0 | 67.5 | 73.6 | 0 | 67.5 | 73.6 | 0 | 67.5 | 73.6 |
| 1.4 | 66.8 | 83.2 | 1.6 | 65.5 | 73.6 | 2.0 | 85.8 | 87.1 |
| 2.7 | 72.7 | 86.7 | 2.8 | 63.3 | 73.2 | 3.2 | 87.5 | 88.4 |
| 3.9 | 72.4 | 84.4 | 4.3 | 63.8 | 73.8 | 4.5 | 87.5 | 89.6 |
| 5.5 | 81.7 | 86.6 | 6.7 | 68.1 | 73.8 | 7.6 | 88.9 | 97.5 |
| 6.7 | 73.3 | 86.1 | 7.2 | 66.0 | 73.7 | 8.5 | 91.4 | 94.2 |

| | | | | | | | | |
|---|---|---|---|---|---|---|---|---|
| phr: means amount of additive with respect to solid paint weight in phr; WCA - water contact angle; C stands for coil coating, S stands for spray coating. | | | | | | | | |

**Table 8**

| Example 14 | | | Example 15 | | | Example 16 | | |
|---|---|---|---|---|---|---|---|---|
| Additive of Ex. 4 | | | Additive of Ex. 5 | | | Additive of Ex. 6 | | |
| phr | WCA | | phr | WCA | | phr | WCA | |
| | C | S | | C | S | | C | S |
| 0 | 67.5 | 73.6 | 0 | 67.5 | 73.6 | 0 | 67.5 | 73.6 |
| 1.4 | 93.7 | 95.9 | 1.7 | 103. 5 | 101.4 | 1.3 | 87.1 | 85.9 |
| 2.7 | 96.3 | 98.6 | 3.5 | 105. 3 | 107.3 | 3.1 | 93.1 | 100.5 |
| 4.8 | 99.4 | 100.3 | 5.2 | 118. 5 | 106.1 | 4.6 | 93.7 | 96.2 |
| 5.4 | 106.7 | 100.6 | 6.8 | 116. 5 | 121.0 | 5.2 | 98.7 | 99.4 |
| 7.6 | 107.4 | 108.8 | 8.7 | 120. 0 | 121.8 | 7.1 | 101.3 | 100.6 |
| | | | | | | 13.7 | 125.2 | 137.1 |

| | | | | | | | | |
|---|---|---|---|---|---|---|---|---|
| phr: means amount of additive with respect to solid paint weight in phr; WCA - water contact angle; C stands for coil coating, S stands for spray coating. | | | | | | | | |

### Example 17. Preparation of a mixture of PVDF Powder and additive

In a stainless beaker, 100 gram of PVDF latex (∼35% of solid content), a feedstock of Hylar® 5000 PVDF resin, was stirred by a Cowle disperser at 500 rpm. The stirring latex was then charged with 29.1 grams of additive of example 6 (11.9% of solid content). The Cowle disperser speed was increased to 3000 rpm and maintained the speed for 10 minutes. The dispersion was then dried in a 60°C oven for 3 days to yield a free-flowing powder comprising VDF polymer and additive.

### Example 18. Preparation of PVDF Paint from powder mixture of example 17

To a glass jar, 100 grams of PVDF powder of example 16 was mixed with 142.9 grams of Paraloid^{®} B44 acrylic polymer (30% of solid content) in isophorone, 78.6 grams of titanium oxide (R-960 from DuPont), and 121.4 grams of isophorone. After brief mixing, glass beads were added to the mixture as grinding media. After sealing the jar, the mixture was shaken by Red Devil mechanical shaker for 7 hours. After filtering off glass beads, the paint was applied onto aluminum panel by an applicator. The coating film was developed in a 518°F (270°C) oven for a minute to obtain a peak metal temperature of 465°F (240°C). The coating was quenched in water. The hydrophobic PVDF coating was found to have a water contact angle of 110°.

### Example 19. Coating Surface Roughness

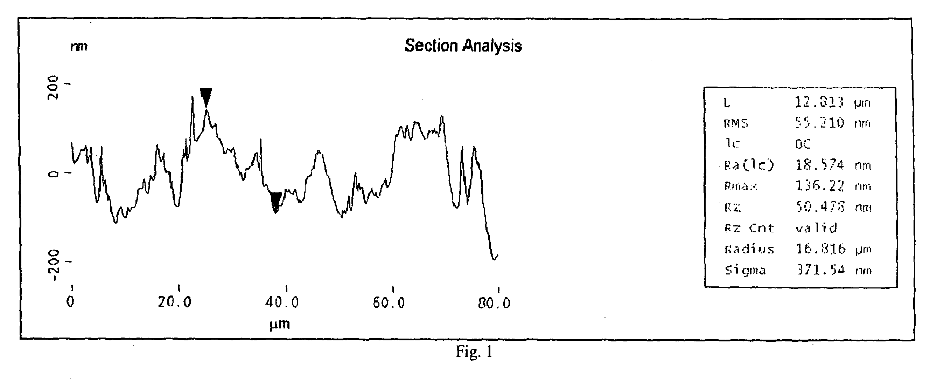

A glass jar was charged with 92 grams of Hylar® 5000 PVDF resin, 142.86 grams of Paraloid® B44 acrylic polymer solution (30 weight %) in isophorone. After mixing briefly, the mixture was added with glass bead as grinding aid and shaken 7 hours. Example 5 additive (69.95 grams) was added to the mixture and shaken for an additional hour. After removing glass beads, the dispersion without pigment was applied onto aluminum panel to develop a thin film coating using coil coat baking condition. The surface morphology was studied by atomic force microscopy. The topography of the coating surface is exhibited as Figure 1. Following parameters were evaluated and their values are listed:
L = horizon distance = 12.813 µm
RMS = root mean square (roughness)= 55.21 nm
Ra = arithmetical mean roughness = 18.574 nm
Rmax = max roughness = 136.22 nm
Rz = ten point mean roughness = 50.478 nm.

## Claims

1. A vinylidene fluoride (VDF) polymer composition comprising:
- at least one VDF polymer [polymer (F)]; and
- at least one additive obtained by treating inorganic particles with a mixture of modifying agents comprising:
- at least one fluoro-containing modifying agent [agent (X)] of formula:
X₄₋ₘAYₘ
wherein m is an integer from 1 to 3, A is a metal selected from the group consisting of Si, Ti and Zr, each of Y, equal to or different from each other, is a hydrolysable group, each of X, equal to or different from each other is a C₁-C₂₄ (hydro)(fluoro)carbon group, with the proviso that at least one of X is a fluorine-containing C₁-C₂₄ group; and
- at least one hydrogen-containing functional modifying agent [agent (Z)] of formula:
Z₄₋ₚEYₚ
wherein p is an integer from 1 to 3, E is a metal selected from the group consisting of Si, Ti and Zr, each of Y, equal to or different from each other, is a hydrolysable group, each of Z, equal to or different from each other is a C₁-C₂₄ hydrocarbon group, with the proviso that at least one of Z comprises a functional group selected from the group consisting of ethylenically unsaturated group; epoxy group; mercapto group; carboxylic acid group in its acid, ester, amide, anhydride, salt or halide form, sulphonic group in its acid, ester, amide, salt or halide form.

2. The composition of claim 1, wherein the polymer (F) is a polymer consisting of :
(a') at least 85 % by moles of vinylidene fluoride (VDF);
(b') optionally from 0.1 to 15%, preferably from 0.1 to 12%, more preferably from 0.1 to 10% by moles of a fluorinated monomer different from VDF; said fluorinated monomer being preferably selected from the group consisting of vinylfluoride (VF₁), chlorotrifluoroethylene (CTFE), hexafluoropropene (HFP), tetrafluoroethylene (TFE), perfluoromethylvinylether (MVE), trifluoroethylene (TrFE) and mixtures therefrom.

3. The composition of claim 1, wherein in agent (X) said fluorine-containing C₁-C₂₄ group complies with formula R_{f}^{X}-G^{X}- group wherein R_{f}^{X} is a mono, oligo- or perfluorinated alkyl group having up to 18 carbon atoms or a mono-, oligo- or perfluorinated aryl group having up to 18 carbon atoms, and G^{X} is a fluorine-free divalent hydrocarbon moiety.

4. The composition of claim 3, wherein the agent (X) is selected from the group consisting of CF₃(CH₂)₂Si(OCH₃)₃, CF₃(CH₂)₂SiCl₃, CF₃(CF₂)₃(CH₂)₂Si(OCH₃)₃, CF₃(CF₂)₃(CH₂)₂Si(OC₂H₅)_{3,} CF₃(CF₂)₃(CH₂)₂SiCl(CH₃)₂, CF₃(CF₂)₃(CH₂)₂Si(CH₃)Cl₂, CF₃(CF₂)₃(CH₂)₂Si(OCH₃)₃, CF₃(CF₂)₅(CH₂)₂Si(OCH₂CH₃)₃, CF₃(CF₂)₅(CH₂)₂Si(OCH₃)₃, CF₃(CF₂)₅(CH₂)₂SiCl₃, CF₃(CF₂)₇(CH₂)₂Si(OCH₃)₃, CF₃(CF₂)₇(CH₂)₂Si(OCH₂CH₃)₃.

5. The composition of anyone of the preceding claims wherein the agent (Z) is selected from the group consisting of vinyltriethoxysilane, vinyltrimethoxysilane, vinyltrismethoxyethoxysilane of formula
CH₂=CHSi(OC₂H₄OCH₃)₃, 2-(3,4-epoxycyclohexyl)ethyltrimethoxysilane of formula: 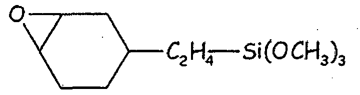 glycidoxypropylmethyldiethoxysilane of formula: 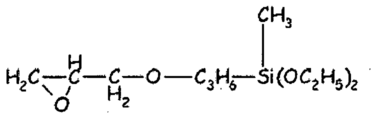 glycidoxypropyltrimethoxysilane of formula: 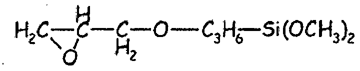 methacryloxypropyltrimethoxysilane of formula: 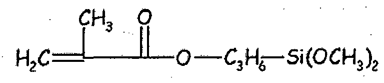 3-chloroisobutyltriethoxysilane, 3-chloropropyltrimethoxysilane,
3-mercaptopropyltriethoxysilane, 3-mercaptopropyltrimethoxysilane,
(3-acryloxypropyl)dimethylmethoxysilane, (3-acryloxypropyl)methyldichlorosilane,
(3-acryloxypropyl)methyldimethoxysilane, 2-(4-chlorosulfonylphenyl)ethyltrimethoxysilane, 2-(4-chlorosulphonylphenyl)ethyl trichlorosilane, carboxyethylsilanetriol, and its sodium salts, triethoxysilylpropylmaleamic acid of formula: 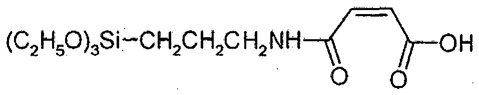 3-(trihydroxysilyl)-1-propane-sulphonic acid of formula HOSO₂-CH₂CH₂CH₂-Si(OH)₃, N-(trimethoxysilylpropyl)ethylene/diamine triacetic acid, and its sodium salts, 3-(triethoxysilyl)propylsuccinic anhydride of formula: 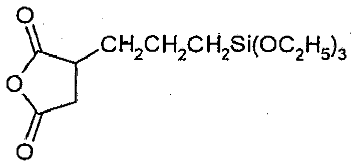 acetamidopropyltrimethoxysilane of formula H₃C-C(O)NH-CH₂CH₂CH₂-Si(OCH₃)₃, acetoxypropyltrimethoxysilane of formula H₃C-C(O)O-CH₂CH₂CH₂-Si(OCH₃)₃, acetoxypropyltriethoxysilane of formula H₃C-C(O)O-CH₂CH₂CH₂-Si(OCH₂CH₃)₃, and acetoxypropyltrichlorosilane of formula H₃C-C(O)O-CH₂CH₂CH₂-SiCl₃.

6. The composition according to anyone of the preceding claims, wherein in formula Z₄₋ₚEYₚ of agent (Z), at least one of groups Z comprises a carboxylic acid group, in particular in its ester form.

7. Composition according to anyone of the preceding claims, wherein the agent (X) is used in amounts of at least 30 %, in certain embodiments at least 50 %, or even at least 70 %, with respect to the combined weight of agent (X) and agent (Z).

8. A coating composition comprising the composition of anyone of claims 1 to 7 either at least partially dispersed or at least partially solubilised in a liquid medium.

9. The coating composition of claim 8, wherein the polymer (F) is at least partially dispersed in said liquid medium and wherein the liquid medium comprises at least one organic solvent selected from intermediate and latent solvents for the polymer (F).

10. The coating composition of claim 8 or 9 additionally comprising at least one (meth)acrylic polymer [polymer (M)] comprising recurring units selected from the groups of formulae j, jj, jjj of formulae: 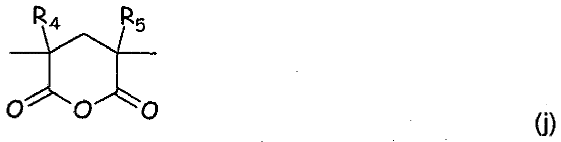 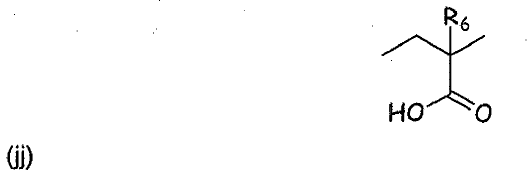 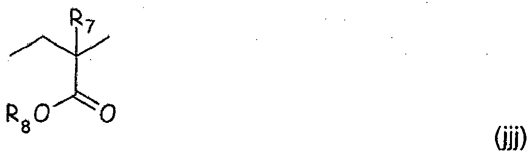 wherein R₄, R₅, R₆, R₇, equal to or different from each other are independently H or C₁₋₂₀ alkyl group, R₈ is selected from the group consisting of substituted or non substituted, linear or branched, C₁-C₁₈ alkyl, C₁-C₁₈ cycloalkyl, C₁-C₃₆ alkylaryl, C₁-C₃₆ aryl, C₁-C₃₆ heterocyclic group.

11. A method for manufacturing the coating composition of claim 9 comprising:
- providing polymer (F) under dispersed form by dispersing a powder of bare polymer (F), generally an agglomerated powder obtained from latex coagulation and drying, in a liquid medium comprising latent and/or intermediate solvent for polymer (F);
- mixing said polymer (F) in said dispersed form with the additive, as defined in claim 1, and with all other optional ingredients and additives.

12. A pre-mixed powder consisting essentially of:
- at least one VDF polymer [polymer (F)]; and
- at least one additive obtained by treating inorganic particles with a mixture of modifying agents comprising:
- at least one fluoro-containing modifying agent [agent (X)] of formula:
X₄₋ₘAYₘ
wherein m is an integer from 1 to 3, A is a metal selected from the group consisting of Si, Ti and Zr, each of Y, equal to or different from each other, is a hydrolysable group, each of X, equal to or different from each other is a C₁-C₂₄ (hydro)(fluoro)carbon group, with the proviso that at least one of X is a fluorine-containing C₁-C₂₄ group; and
- at least one hydrogen-containing functional modifying agent [agent (Z)] of formulae:
Z₄₋ₚEYₚ
wherein p is an integer from 1 to 3, E is a metal selected from the group consisting of Si, Ti and Zr, each of Y, equal to or different from each other, is a hydrolysable group, each of Z, equal to or different from each other is a C₁-C₂₄ hydrocarbon group, with the proviso that at least one of Z comprises a functional group selected from the group consisting of ethylenically unsaturated groups; epoxy groups; mercapto groups; carboxylic acid group in its acid, ester, amide, anhydride, salt or halide form, sulphonic group in its acid, ester, salt or halide form,
and, optionally, of other solid ingredients.

13. A method for manufacturing the pre-mixed powder of claim 12, said method comprising:
- mixing in an aqueous phase a powder of bare polymer (F), generally an agglomerated powder obtained from latex coagulation, with said additive, as above detailed, and optionally with said other ingredients;
- then evaporating the aqueous phase until dryness, at a temperature of at least 50°C, and optionally
- grinding or sieving the so obtained solid residue
in order to obtain a pre-mixed powder.

14. Use of the composition according to anyone of claims 1 to 10 for coating substrates.

## Patentansprüche

1. Vinylidenfluorid(VDF)-Polymer-Zusammensetzung, umfassend:
- mindestens ein VDF-Polymer [Polymer (F)]; und
- mindestens ein durch Behandlung von anorganischen Teilchen mit einer Mischung von Modifizierungsmitteln, umfassend:
- mindestens ein fluorhaltiges Modifizierungsmittel [Mittel (X)] der Formel:
X₄₋ₘAYₘ
worin m für eine ganze Zahl von 1 bis 3 steht, A für ein Metall aus der Gruppe bestehend aus Si, Ti und Zr steht, Y jeweils gleich oder verschieden ist und für eine hydrolysierbare Gruppe steht, X jeweils gleich oder verschieden ist und für eine C₁-C₂₄-(Hydro)(fluor)kohlenstoffgruppe steht, mit der Maßgabe, dass mindestens eine der Variablen X für eine fluorhaltige C₁-C₂₄-Gruppe steht; und
- mindestens ein wasserstoffhaltiges funktionelles Modifizierungsmittel [Mittel (Z)] der Formel:
ZX₄₋ₚEYₚ
worin p für eine ganze Zahl von 1 bis 3 steht, E für ein Metall aus der Gruppe bestehend aus Si, Ti und Zr steht, Y jeweils gleich oder verschieden ist und für eine hydrolysierbare Gruppe steht, Z jeweils gleich oder verschieden ist und für eine C₁-C₂₄-Kohlenwasserstoffgruppe steht, mit der Maßgabe, dass mindestens eine der Variablen Z eine funktionelle Gruppe aus der Gruppe bestehend aus einer ethylenisch ungesättigten Gruppe; einer Epoxidgruppe; einer Mercaptogruppe; einer Carbonsäuregruppe in ihrer Säure-, Ester-, Amid-, Anhydrid-, Salz- oder Halogenidform und einer Sulfongruppe in ihrer Säure-, Ester-, Amid-, Salzoder Halogenidform umfasst;
erhaltenes Additiv.

2. Zusammensetzung nach Anspruch 1, wobei es sich bei dem Polymer (F) um ein Polymer aus:
(a') mindestens 85 Mol-% Vinylidenfluorid (VDF);
(b') gegebenenfalls 0,1 bis 15 Mol-%, vorzugsweise 0,1 bis 12 Mol-%, weiter bevorzugt 0,1 bis 10 Mol-%, eines fluorierten Monomers, das von VDF verschieden ist; wobei das fluorierte Monomer vorzugsweise aus der Gruppe bestehend aus Vinylfluorid (VF₁), Chlortrifluorethylen (CTFE), Hexafluorpropen (HFP), Tetrafluorethylen (TFE), Perfluormethylvinylether (MVE), Trifluorethylen (TrFE) und Mischungen davon ausgewählt ist;
handelt.

3. Zusammensetzung nach Anspruch 1, wobei in Mittel (X) die fluorhaltige C₁-C₂₄-Gruppe der Formel R_{f}^{x}-G^{x}- entspricht, worin R_{f}^{x} für eine mono-, oligooder perfluorierte Alkylgruppe mit bis zu 18 Kohlenstoffatomen oder eine mono-, oligo- oder perfluorierte Arylgruppe mit bis zu 18 Kohlenstoffatomen steht und G^{x} für eine fluorfreie zweiwertige Kohlenwasserstoffgruppierung steht.

4. Zusammensetzung nach Anspruch 3, wobei das Mittel (X) aus der Gruppe bestehend aus CF₃(CH₂)₂Si(OCH₃)₃, CF₃(CH₂)₂SiCl₃, CF₃(CF₂)₃(CH₂)₂Si(OCH₃)₃, CF₃(CF₂)₃(CH₂)₂Si(OC₂H₅)₃, CF₃(CF₂)₃(CH₂)₂SiCl(CH₃)₂, CF₃(CF₂)₃(CH₂)₂Si(CH₃)Cl₂, CF₃(CF₂)₃(CH₂)₂Si(OCH₃)₃, CF₃(CF₂)₅(CH₂)₂Si(OCH₂CH₃)₃, CF₃(CF₂)₅(CH₂)₂Si(OCH₃)₃, CF₃(CF₂)₅(CH₂)₂SiCl₃, CF₃(CF₂)₇(CH₂)₂Si(OCH₃)₃, CF₃(CF₂)₇(CH₂)₂Si(OCH₂CH₃)₃, ausgewählt ist.

5. Zusammensetzung nach einem der vorhergehenden Ansprüche, wobei das Mittel (Z) aus der Gruppe bestehend aus Vinyltriethoxysilan, Vinyltrimethoxysilan, Vinyltrismethoxyethoxysilan der Formel CH₂=CHSi(OC₂H₄OCH₃)₃, 2-(3,4-Epoxycyclohexyl)ethyltrimethoxysilan der Formel: 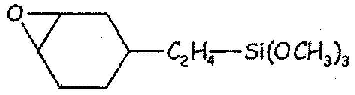 Glycidoxypropylmethyldiethoxysilan der Formel: 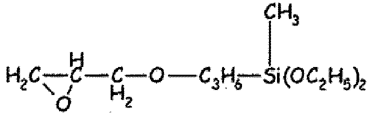 Glycidoxypropyltrimethoxysilan der Formel: 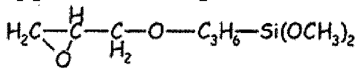 Methacryloxypropyltrimethoxysilan der Formel: 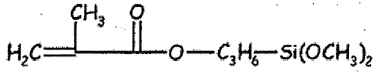 3-Chlorisobutyltriethoxysilan, 3-Chlorpropyltrimethoxysilan, 3-Mercaptopropyltriethoxysilan, 3-Mercaptopropyltrimethoxysilan, (3-Acryloxy-propyl)dimethylmethoxysilan, (3-Acryloxypropyl)-methyldichlorsilan, (3-Acryloxypropyl)methyl-dimethoxysilan, 2-(4-Chlorsulfonylphenyl)ethyl-trimethoxysilan, 2-(4-Chlorsulfonylphenyl)ethyl-trichlorsilan, Carboxyethylsilantriol und dessen Natriumsalzen, Triethoxysilylpropylmaleinamidsäure der Formel: 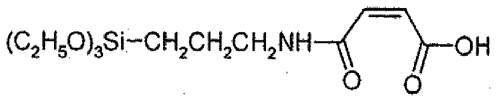 3-(Trihydroxysilyl)-1-propansulfonsäure der Formel HOSO₂-CH₂CH₂CH₂-Si(OH)₃, N-(Trimethoxysilylpropyl)-ethylendiamintriaessigsäure und deren Natriumsalzen, 3-(Triethoxysilyl)propylbernsteinsäureanhydrid der Formel: 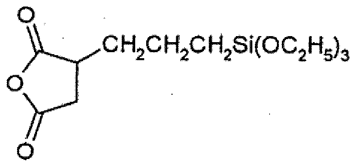 Acetamidopropyltrimethoxysilan der Formel H₃C-C(O)NH-CH₂CH₂CH₂-Si(OCH₃)₃, Acetoxypropyltrimethoxysilan der Formel H₃C-C(O)O-CH₂CH₂CH₂-Si(OCH₃)₃, Acetoxypropyltriethoxysilan der Formel H₃C-C(O)O-CH₂CH₂CH₂-Si(OCH₂CH₃)₃
und Acetoxypropyltrichlorsilan der Formel H₃C-C(O)O-CH₂CH₂CH₂-SiCl₃ ausgewählt ist.

6. Zusammensetzung nach einem der vorhergehenden Ansprüche, wobei in der Formel Z₄₋ₚEYₚ von Mittel (Z) mindestens eine der Gruppen Z eine Carbonsäuregruppe, insbesondere in ihrer Esterform, umfasst.

7. Zusammensetzung nach einem der vorhergehenden Ansprüche, wobei das Mittel (X) in Mengen von mindestens 30%, in bestimmten Ausführungsformen mindestens 50%, oder sogar mindestens 70%, bezogen auf das kombinierte Gewicht von Mittel (X) und Mittel (Z), verwendet wird.

8. Beschichtungszusammensetzung, umfassend die Zusammensetzung nach einem der Ansprüche 1 bis 7 entweder zumindest teilweise in einem flüssigen Medium dispergiert oder zumindest teilweise in einem flüssigen Medium solubilisiert.

9. Beschichtungszusammensetzung nach Anspruch 8, wobei das Polymer (F) mindestens teilweise in dem flüssigen Medium dispergiert ist und wobei das flüssige Medium mindestens ein organisches Lösungsmittel, das aus intermediären und latenten Lösungsmitteln für das Polymer (F) ausgewählt ist, umfasst.

10. Beschichtungszusammensetzung nach Anspruch 8 oder 9, zusätzlich umfassend mindestens ein (Meth)-acryl-Polymer [Polymer (M)], das Wiederholungseinheiten umfasst, die aus den Gruppen der Formeln j, jj, jjj ausgewählt sind: 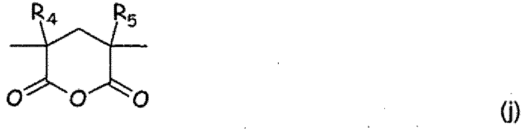 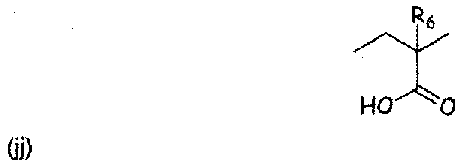 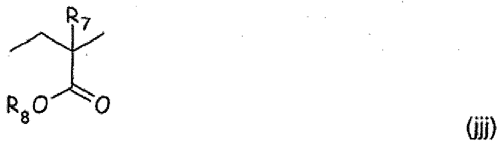 worin R₄, R₅, R₆, R₇ gleich oder voneinander verschieden sind und unabhängig für H oder eine C₁₋₂₀-Alkylgruppe stehen, R₈ aus der Gruppe bestehend aus substituierten oder unsubstituierten, linearen oder verzweigten C₁-C₁₈-Alkyl-, C₁-C₁₈-Cycloalkyl-, C₁-C₃₆-Alkylaryl-, C₁-C₃₆-Aryl-, C₁-C₃₆-Heterocyclylgruppen ausgewählt ist.

11. Verfahren zur Herstellung der Beschichtungszusammensetzung nach Anspruch 9, bei dem man:
- durch Dispergieren eines Pulvers von bloßem Polymer (F), im Allgemeinen eines durch Latexkoagulation und Trocknen erhaltenen agglomerierten Pulvers, in einem flüssigen Medium, das latentes und/oder intermediäres Lösungsmittel für Polymer (F) umfasst, Polymer (F) in dispergierter Form bereitstellt;
- das Polymer (F) in der dispergierten Form mit dem Additiv gemäß Anspruch 1 und mit allen anderen fakultativen Bestandteilen und Additiven mischt.

12. Vorgemischtes Pulver, im Wesentlichen bestehend aus:
- mindestens einem VDF-Polymer [Polymer (F)]; und
- mindestens einem durch Behandlung von anorganischen Teilchen mit einer Mischung von Modifizierungsmitteln, umfassend:
- mindestens ein fluorhaltiges Modifizierungsmittel [Mittel (X)] der Formel:
X₄₋ₘAYₘ
worin m für eine ganze Zahl von 1 bis 3 steht, A für ein Metall aus der Gruppe bestehend aus Si, Ti und Zr steht, Y jeweils gleich oder verschieden ist und für eine hydrolysierbare Gruppe steht, X jeweils gleich oder verschieden ist und für eine C₁-C₂₄-(Hydro)(fluor)kohlenstoffgruppe steht, mit der Maßgabe, dass mindestens eine der Variablen X für eine fluorhaltige C₁-C₂₄-Gruppe steht; und
- mindestens ein wasserstoffhaltiges funktionelles Modifizierungsmittel [Mittel (Z)] der Formel:
Z₄₋ₚEYₚ
worin p für eine ganze Zahl von 1 bis 3 steht, E für ein Metall aus der Gruppe bestehend aus Si, Ti und Zr steht, Y jeweils gleich oder verschieden ist und für eine hydrolysierbare Gruppe steht, Z jeweils gleich oder verschieden ist und für eine C₁-C₂₄-Kohlenwasserstoffgruppe steht, mit der Maßgabe, dass mindestens eine der Variablen Z eine funktionelle Gruppe aus der Gruppe bestehend aus ethylenisch ungesättigten Gruppen; Epoxidgruppen; Mercaptogruppen; einer Carbonsäuregruppe in ihrer Säure-, Ester-, Amid-, Anhydrid-, Salz- oder Halogenidform und einer Sulfongruppe in ihrer Säure-, Ester-, Salz- oder Halogenidform umfasst; erhaltenen Additiv und gegebenenfalls anderen festen Bestandteilen.

13. Verfahren zur Herstellung des vorgemischten Pulvers nach Anspruch 12, bei dem man:
- ein Pulver von bloßem Polymer (F), im Allgemeinen ein durch Latexkoagulation erhaltenes agglomeriertes Pulver, in wässriger Phase mit dem Additiv gemäß obiger Beschreibung und gegebenenfalls mit den anderen Bestandteilen mischt;
- dann die wässrige Phase bei einer Temperatur von mindestens 50°C bis zur Trockne abdampft und gegebenenfalls
- den so erhaltenen festen Rückstand mahlt oder siebt,
wodurch man ein vorgemischtes Pulver erhält.

14. Verwendung der Zusammensetzung nach einem der Ansprüche 1 bis 10 zur Beschichtung von Substraten.

## Revendications

1. Composition de polymère de fluorure de vinylidène (VDF) comprenant :
- au moins un polymère de VDF [polymère (F)] ; et
- au moins un additif obtenu en traitant des particules inorganiques avec un mélange d'agents modificateurs comprenant :
- au moins un agent modificateur contenant du fluor [agent (X)] de formule :
X₄₋ₘAYₘ
dans laquelle m est un entier de 1 à 3, A est un métal choisi dans le groupe constitué par Si, Ti et Zr, chacun des Y, identiques ou différents les uns des autres, est un groupe hydrolysable, chacun des X, identiques ou différents les uns des autres, est un groupe (hydro)(fluoro)carboné en C₁-C₂₄, à condition qu'au moins un des X soit un groupe en C₁-C₂₄ contenant du fluor ; et
- au moins un agent modificateur fonctionnel contenant de l'hydrogène [agent (Z)] de formule :
Z₄₋ₚEYₚ
dans laquelle p est un entier de 1 à 3, E est un métal choisi dans le groupe constitué par Si, Ti et Zr, chacun des Y, identiques ou différents les uns des autres, est un groupe hydrolysable, chacun des Z, identiques ou différents les uns des autres, est un groupe hydrocarboné en C₁-C₂₄, à condition qu'au moins un des Z comprenne un groupe fonctionnel choisi dans le groupe constitué par un groupe éthyléniquement insaturé ; un groupe époxy ; un groupe mercapto ; un groupe acide carboxylique sous sa forme acide, ester, amide, anhydride, sel ou halogénure ; et un groupe sulfonique sous sa forme acide, ester, amide, sel ou halogénure.

2. Composition selon la revendication 1, dans laquelle le polymère (F) est un polymère composé de :
(a') au moins 85 % en moles de fluorure de vinylidène (VDF) ;
(b') optionnellement de 0,1 à 15 %, de préférence de 0,1 à 12 %, mieux de 0,1 à 10 % en moles d'un monomère fluoré différent du VDF ; ledit monomère fluoré étant de préférence choisi dans le groupe constitué par le fluorure de vinyle (VF₁), le chlorotrifluoroéthylène (CTFE), l'hexafluoropropène (HFP), le tétrafluoroéthylène (TFE), l'éther perfluorométhylvinylique (MVE), le trifluoroéthylène (TrFE) et les mélanges de ceux-ci.

3. Composition selon la revendication 1, dans laquelle dans l'agent (X) ledit groupe en C₁-C₂₄ contenant du fluor répond à la formule R_{f}^{X}-G^{X}- dans laquelle R_{f}^{X} est un groupe alkyle mono-, oligo- ou perfluoré ayant jusqu'à 18 atomes de carbone ou un groupe aryle mono-, oligo-ou perfluoré ayant jusqu'à 18 atomes de carbone, et G^{X} est une fraction hydrocarbonée divalente sans fluor.

4. Composition selon la revendication 3, dans laquelle l'agent (X) est choisi dans le groupe constitué par CF₃(CH₂)₂Si(OCH₃)₃, CF₃(CH₂)₂SiCl₃, CF₃(CF₂)₃(CH₂)₂Si(OCH₃)₃, CF₃(CF₂)₃(CH₂)₂Si(OC₂H₅)₃, CF₃(CF₂)₃(CH₂)₂SiCl(CH₃)₂, CF₃(CF₂)₃(CH₂)₂Si(CH₅)Cl₂, CF₃(CF₂)₃(CH₂)₂Si(OCH₃)₃, CF₃(CF₂)₂(CH₂)₂Si(OCH₂CH₃)₃, CF₃(CF₂)₅(CH₂)₂Si(OCH₃)₃, CF₃(CF₂)₅(CH₂)₂SiCl₃, CF₃(CF₂)₇(CH₂)₂Si(OCH₃)₃, et CF₃(CF₂)₇(CH₂)₂Si(OCH₂CH₃)₃.

5. Composition selon l'une quelconque des revendications précédentes dans laquelle l'agent (Z) est choisi dans le groupe constitué par le vinyltriéthoxysilane, le vinyltriméthoxysilane, le vinyltrisméthoxyéthoxysilane de formule CH₂=CHSi(OC₂H₄OCH₃)₃, le 2- (3, 4-époxy-cyclohexyl)éthyltriméthoxysilane de formule : 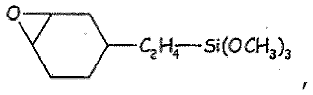 le glycidoxypropylméthyldiéthoxysilane de formule : 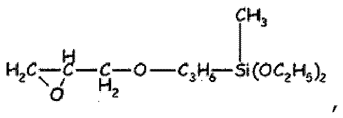 le glycidoxypropyltriméthoxysilane de formule : 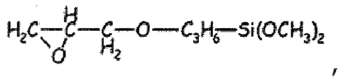 le méthacryloxypropyltriméthoxysilane de formule : 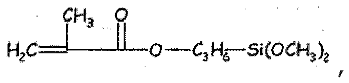 le 3-chloroisobutyltriéthoxysilane, le 3-chloropropyl-triméthoxysilane, le 3-mercaptopropyltriéthoxysilane, le 3-mercaptopropyltriméthoxysilane, le (3-acryloxy-propyl)diméthylméthoxysilane, le (3-acryloxypropyl)-méthyldichlorosilane, le (3-acryloxypropyl)méthyl-diméthoxysilane, le 2-(4-chlorosulfonylphényl)éthyl-triméthoxysilane, le 2-(4-chlorosulfonylphényl)éthyl-trichlorosilane, le carboxyéthylsilanetriol et ses sels de sodium, l'acide triéthoxysilylpropylmaléamique de formule : 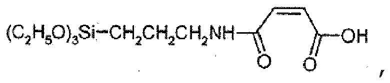 l'acide 3-(trihydroxysilyl)-1-propane-sulfonique de formule HOSO₂-CH₂CH₂CH₂-Si(OH)₃, l'acide N-(triméthoxy-silylpropyl)éthylènediamine-triacétique et ses sels de sodium, l'anhydride 3-(triéthoxysilyl)propylsuccinique de formule : 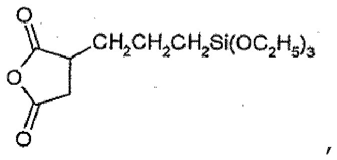 l'acétamidopropyltriméthoxysilane de formule H₃C-C(O)NH-CH₂CH₂CH₂-Si(OCH₃)₃, l'acétoxypropyltriméthoxysilane de formule H₃C-C(O)O-CH₂CH₂CH₂-Si(OCH₃)₃, l'acétoxypropyl-triéthoxysilane de formule H₃C-C(O)O-CH₂CH₂CH₂-Si(OCH₂CH₃)₃, et l'acétoxypropyltrichlorosilane de formule H₃C-C(O)O-CH₂CH₂CH₂-SiCl₃.

6. Composition selon l'une quelconque des revendications précédentes, dans laquelle dans la formule Z₄₋ₚEYₚ de l'agent (Z), au moins un des groupes Z comprend un groupe acide carboxylique, en particulier sous sa forme ester.

7. Composition selon l'une quelconque des revendications précédentes, dans laquelle l'agent (X) est utilisé dans des quantités d'au moins 30 %, dans certains modes de réalisation au moins 50 %, ou même au moins 70 %, par rapport au poids combiné d'agent (X) et d'agent (Z).

8. Composition de revêtement comprenant la composition de l'une quelconque des revendications 1 à 7 au moins partiellement dispersée ou au moins partiellement solubilisée dans un milieu liquide.

9. Composition de revêtement selon la revendication 8, dans laquelle le polymère (F) est au moins partiellement dispersé dans ledit milieu liquide et dans laquelle le milieu liquide comprend au moins un solvant organique choisi parmi les solvants intermédiaires et latents pour le polymère (F).

10. Composition de revêtement selon la revendication 8 ou 9 comprenant de plus au moins un polymère (méth)acrylique [polymère (M)] comprenant des motifs récurrents choisis parmi les groupes des formules j, jj, jjj : 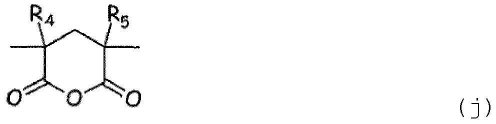 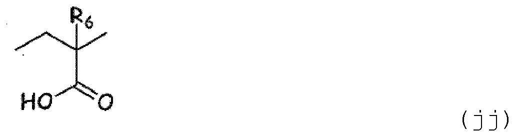 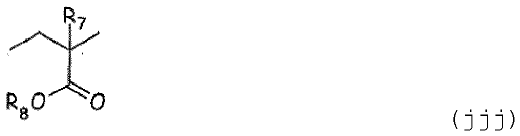 dans lesquelles R₄, R₅, R₆, R₇, identiques ou différents les uns des autres, représentent indépendamment H ou un groupe alkyle en C₁₋₂₀, R₈ est choisi dans le groupe constitué par les groupes alkyle en C₁-C₁₈, cycloalkyle en C₁-C₁₈, alkylaryle en C₁-C₃₆, aryle en C₁-C₃₆ et hétérocycliques en C₁-C₃₆, substitués ou non substitués, linéaires ou ramifiés.

11. Procédé de fabrication de la composition de revêtement de la revendication 9 comprenant :
- l'obtention du polymère (F) sous forme dispersée par dispersion d'une poudre de polymère (F) brut, généralement une poudre agglomérée obtenue par coagulation et séchage de latex, dans un milieu liquide comprenant un solvant latent et/ou intermédiaire pour le polymère (F) ;
- le mélange dudit polymère (F) dans ladite forme dispersée avec l'additif tel que défini dans la revendication 1, et avec tous les autres ingrédients et additifs optionnels.

12. Poudre prémélangée essentiellement composée de :
- au moins un polymère de VDF [polymère (F)] ; et
- au moins un additif obtenu en traitant des particules inorganiques avec un mélange d'agents modificateurs comprenant :
- au moins un agent modificateur contenant du fluor [agent (X)] de formule :
X₄₋ₘAYₘ
dans laquelle m est un entier de 1 à 3, A est un métal choisi dans le groupe constitué par Si, Ti et Zr, chacun des Y, identiques ou différents les uns des autres, est un groupe hydrolysable, chacun des X, identiques ou différents les uns des autres, est un groupe (hydro)(fluoro)carboné en C₁-C₂₄, à condition qu'au moins un des X soit un groupe en C₁-C₂₄ contenant du fluor ; et
- au moins un agent modificateur fonctionnel contenant de l'hydrogène [agent (Z)] de formule :
Z₄₋ₚEYₚ
dans laquelle p est un entier de 1 à 3, E est un métal choisi dans le groupe constitué par Si, Ti et Zr, chacun des Y, identiques ou différents les uns des autres, est un groupe hydrolysable, chacun des Z, identiques ou différents les uns des autres, est un groupe hydrocarboné en C₁-C₂₄, à condition qu'au moins un des Z comprenne un groupe fonctionnel choisi dans le groupe constitué par des groupes éthyléniquement insaturés ; des groupes époxy ; des groupes mercapto ; un groupe acide carboxylique sous sa forme acide, ester, amide, anhydride, sel ou halogénure ; et un groupe sulfonique sous sa forme acide, ester, amide, sel ou halogénure, et, optionnellement, d'autres ingrédients solides.

13. Procédé de fabrication de la poudre prémélangée de la revendication 12, ledit procédé comprenant :
- le mélange dans une phase aqueuse d'une poudre de polymère (F) brut, généralement une poudre agglomérée obtenue par coagulation de latex, avec ledit additif tel que détaillé ci-dessus, et optionnellement avec lesdits autres ingrédients ;
- puis l'évaporation de la phase aqueuse jusqu'à siccité, à une température d'au moins 50 °C, et optionnellement
- le broyage ou le tamisage du résidu solide ainsi obtenu
afin d'obtenir une poudre prémélangée.

14. Utilisation de la composition selon l'une quelconque des revendications 1 à 10 pour revêtir des substrats.
